# EUROPÄISCHE PATENTANMELDUNG

(11) **EP 0 882 391 A2**
(43) Veröffentlichungstag der Anmeldung: **09.12.1998**
(21) Anmeldenummer: 98109992.2
(22) Anmeldetag: 02.06.1998
(51) Int. Cl.: A01G 9/12

(54) **Vorrichtung zum Ausrichten von Pflanzen**

(30) Priorität: 05.06.1997 DE 19723546
(71) Anmelder: Heitz, Walter-Helmut, 24450 St. Pierre de Frugie (FR)
(72) Erfinder: Heitz, Walter-Helmut, 24450 St. Pierre de Frugie (FR)
(74) Vertreter: Patentanwälte Thömen & Körner

(57) **Zusammenfassung**

Es ist eine Vorrichtung zum Ausrichten von Pflanzen mit einer Stütze zum Abstützen von Pflanzen und Pflanzenteilen offenbart, die aus mindestens einem Halter, aus mindestens einem Stellelement, welches in dem Halter höhenverstellbar anbringbar ist, und aus mindestens einem Stützelement, welches die zu schützende Pflanze zumindest teilweise umgreift, besteht, wobei das Stützelement längenverstellbar ist, und wobei der Abstand zwischen Stellelement und Stützelement durch ein Abstandselement verstellbar ist, wobei das Stützelement am Stellelement anbringbar ist. Die Vorrichtung zeichnet sich dadurch aus, daß das Stellelement zur Halterung jeweils des Stützelements und des Abstandselements ausgebildet ist, wobei das Abstandselement zur Halterung des Stützelements und zur Verbindung mit mindestens einem weiteren Stellelement ausgebildet ist, oder wobei das Abstandselement als Stützelement ausgebildet ist.

## Beschreibung

Die Erfindung betrifft eine Vorrichtung zum Ausrichten von Pflanzen mit den Merkmalen des Oberbegriffs des Patentanspruchs 1.

Eine derartige Vorrichtung ist aus der DE-OS 28 09 388 bekannt. Diese Vorrichtung weist einen Halter auf, entlang dessen ein Steilelement höhenverstellbar ist. An dem Stellelement ist ein Abstandselement angebracht, an dem ein Stützelement befestigt ist. Die bekannte Vorrichtung eignet sich zum Stützen von Einzelpflanzen, insbesondere zum Stützen von Bäumen, besitzt aber den Nachteil, daß sie sich nur ungenügend veränderten Wachstumsbedingungen der Pflanze oder an andere zu stützende oder zu ordnende Pflanzenarten anpassen läßt. Insbesondere ist es nicht oder nur ungenügend möglich, das Stützelement an andere Durchmesserbereiche von zu ordnenden Pflanzenteilen anzupassen. Es ist auch im Bedarfsfall nicht möglich, beim Einsatz mehrerer Vorrichtungen die Höhe der Halter so auszurichten, daß alle Halter die gleiche Höhe aufweisen. Auch ist es nicht oder nur ungenügend möglich, an einem Halter mehrere Stellelemente, Abstandselemente und/oder Stützelemente anzubringen, wenn nur ein Kalter zum Stützen mehrerer Pflanzen verwendet werden soll.

Aus der DE-GM G 88 11 068.0 ist ferner eine Pflanzenstütze zur Abstützung von Stauden und Einzelpflanzen bekannt, bei der ein Stellelement in Form eines doppelt abgewinkelten Blechstreifens entlang eines vorgegebenen Halters höhenverstellbar ist und an welchem ein Stützelement in Form eines längenverstellbaren Drahtes direkt mit dem Stellelement verbindbar ist. Bei dieser Pflanzenstütze ist zwar das Stellelement entlang des Halters höhenverstellbar, der Abstand zwischen Stützelement und Stellelement ist bei dieser Pflanzenstütze jedoch nicht veränderlich. Auch hier ist die Anpassung der Pflanzenstütze an verschiedene Einsatzzwecke nur schwer möglich.

Es sind ferner abgewinkelte Drahtstäbe mit einer Öse am Ort der Abwinklung und mit einem Haken am horizontalen Ende bekannt, die sich mit den Ösen und den Haken horizontal zu einem Quadrat, Dreieck oder Rechteck verbinden lassen. Diese Stäbe lassen sich , durch die Öse bedingt, nur von Hand in den Boden stecken. Aufgrund der unterschiedlichen Festigkeit des Bodens ist es schwierig, die Einstecktiefe jeweils genau so zu bemessen, daß sich diese Stäbe zu einem Rechteck, Quadrat oder Dreieck verbinden lassen, um dann die zu stützenden Pflanzen oder Pflanzenteile an ihnen zu befestigen. Ferner lassen sich mit diesen bekannten Stäben keine, im Bedarfsfalle erwünschten, runden Rahmen bilden.

Es sind ferner Vorrichtungen bekannt, die aus einem Haltestab und aus einem Ring bestehen, wobei der Ring mit Stützstäben an dem Stab befestigt ist. Sollen die Triebe beispielsweise eines Strauches mittels dieser Vorrichtung gestützt werden, ist es nötig, die Vorrichtung in Pflanzenmitte, also direkt in den empfindlichen Wurzelbereich zu stecken. Eine Schädigung der Wurzel ist hierbei unausweichlich. Ferner ist es hierbei nachteilig, daß der Durchmesser des Ringes unveränderbar ist, so daß sich diese Vorrichtung nicht an den Breitenwuchs der zu stützenden Pflanze anpassen läßt.

Allen bekannten Vorrichtungen ist gemeinsam, daß sie ein zeitraubendes und aufwendiges Ausrichten bezüglich ihrer Höhe und bezüglich des Abstands zur Pflanze erfordern, daß sie sich nur schwer oder gar nicht mit mehreren Vorrichtungen und deren Bestandteilen kombinieren lassen und daß sie sich nur schwer oder gar nicht an verschiedenste Pflanzenarten und ihren Wuchsbedingungen anpassen lassen.

Aufgabe der Erfindung ist es daher, eine Vorrichtung zum Ausrichten von Pflanzen zu schaffen, die leicht und schnell installiert und ausgerichtet werden kann, die ferner mit mindestens einer weiteren Vorrichtung und ihren Bestandteilen verbunden werden kann.

Diese Aufgabe wird mit einer Vorrichtung zum Ausrichten von Pflanzen gelöst, welche die Merkmale des kennzeichnenden Teils des Anspruchs 1 aufweist.

Das Stellelement der Stütze ist zur Halterung jeweils des Stützelements und des Abstandselements ausgebildet, wobei das Abstandselement zur Halterung des Stützelements und zur Verbindung mit mindestens einem weiteren Stellelement ausgebildet ist. Das Abstandselement ist dabei auch als Stützelement ausgebildet.

Hierdurch wird eine Vorrichtung zum Ausrichten von Pflanzen geschaffen, die auf einfachste Weise justiert werden kann, die schnell und einfach installiert werden kann, die sich leicht mit mindestens einer weiteren Vorrichtung und deren Teilen verbinden läßt und die einfach und schnell an die verschiedensten Wuchsbedingungen verschiedener Pflanzenarten anpaßbar ist. Denn das Stellelement kann das Stützelement direkt tragen, kann aber auch (und gleichzeitig) als Lager für das Abstandselement dienen. Das Abstandselement wiederum kann eine Verbindung zu einem weiteren Stellelement, und damit zu einer weiteren Vorrichtung herstellen, wodurch sich die unterschiedlichsten Kombinationen mehrerer Vorrichtungen und deren Teile ergeben können.

Vorteilhafterweise ist das Stellelement um den Halter drehbar. Durch diese Ausgestaltung läßt sich auch das Abstandselement und/oder das Stützelement durch die Verdrehbarkeit des Stellelements um den Halter verdrehen, so daß sich, wenn beispielsweise mehrere Stellelemente durch Abstandselemente miteinander verbunden werden, auch kreisförmige oder zumindest polygone Konfigurationen mehrerer miteinander verbundener Vorrichtungen ermöglichen lassen. Durch die Verdrehbarkeit des Stellelements läßt sich die Verstellbarkeit der einzelnen Elemente der Vorrichtung in Bezug auf die zu stützende Pflanze noch vergrößern.

Vorteilhafterweise weist das Stellelement eine dem Durchmesser des Halters entsprechende und die Längsachse bildende zentrale Bohrung auf. Hierdurch wird auf einfache Weise eine Konzentrizität des Halters mit dem Stellelement erreicht, was beim Verdrehen des Stellelements vorteilhaft ist, da dann keine Radiusänderungen beispielsweise des Abstandselements berücksichtigt werden müssen.

Bevorzugterweise weist das Stellelement mindestens eine als Lager für das Abstandselement dienende quer zur Längsachse verlaufende Bohrung auf. Diese Bohrung ermöglicht ein einfaches Einführen bzw. Entfernen des Abstandselements und gestattet auf einfachste Weise ein Verschieben und Verdrehen des Abstandselements innerhalb der Bohrung.

Vorzugsweise weist das Stellelement mindestens einen Schlitz zur Aufnahme des Stützelements auf. Dieser Schlitz gestattet ein schnelles und einfaches Einfügen und Verbinden des Stützelements in das bzw. mit dem Stellelement.

Vorteilhafterweise ist der Schlitz parallel zur Längsachse bzw. zur Bohrung geführt. Dadurch wird erreicht, daß das mit dem Stellelement verbundene Stützelement in horizontaler Richtung mit dem Halter bzw. in vertikaler Richtung mit der als Lager für das Abstandselement dienenden Bohrung ausgerichtet ist.

Vorzugsweise mündet der Schlitz in die Bohrung, damit seine Tiefe der Breite des bevorzugt zur Anwendung kommenden, als Lochband ausgebildeten Stützelements entspricht.

In einer bevorzugten Ausführungsform besteht das Stellelement aus einem Oberteil und einem Unterteil, welche drehbar miteinander verbunden sind und eine gemeinsame, den Durchmesser des Halters entsprechende und die Längsachse bildende zentrale Bohrung aufweisen.

Hierdurch werden die Kombinationsmöglichkeiten des Stellelements mit Abstandselementen und Stützelementen noch erhöht, da beispielsweise von einem Stützelement Abstandselemente in verschiedene Richtungen und mit verschiedener Länge abgehen können.

In einer vorteilhaften Ausgestaltung ist das Unterteil des Stellelements mit einer gegenüber der Bohrung des Oberteils exzentrisch versetzten Bohrung versehen. Diese exzentrische Bohrung ermöglicht eine Höhenfixierung des Stellelements gegenüber dem Halter, wobei die Festlegung durch einfaches Verdrehen des Unterteils gegen das Oberteil hergestellt oder gelöst werden kann.

Das Stellelement kann in einer vorteilhaften Ausgestaltung der Erfindung an seinen Ober- und Unterteilen mit einer fühl- und sichtbaren Markierung, beispielsweise mit erhabenen Pfeilen oder dergleichen, versehen sein, welche es gestatten, optisch und/oder sensorisch festzustellen, in welcher Lage sich die Bohrungen zueinander befinden, d.h., festzustellen, ob sich das Stellelement in gelöstem oder arretiertem Zustand befindet. Zu diesem Zweck kann das Stellelement zwischen seinem Oberteil und seinem Unterteil auch mit einer Rastung versehen sein, welche dann wirksam wird, wenn die Klemmwirkung der gegeneinander verdrehten Ober- und Unterteile am größten ist. Eine derartige Rastung gestattet zudem eine akustische Kontrolle der optimalen Klemmwirkung des Stellelements gegen den Halter .

Bevorzugterweise ist das Stützelement ein flexibles Band. Diese Ausgestaltung ermöglicht zum einen den sicheren Halt des Stützelements im Schlitz des Stellelements und zum anderen läßt sich durch die Flexibilität des Bandes das Stützelement einfach an verschiedenste Querschnittskonfigurationen der zu stützenden Pflanzen oder Pflanzenteile ermöglichen.

Das Band kann die Pflanze teilweise oder vollständig umgreifen.

Vorteilhafterweise lassen sich die Enden des Bandes miteinander verbinden. Hierdurch wird im Bedarfsfalle ein geschlossener Ring des Stützelements ermöglicht.

Bevorzugterweise entspricht die Dicke des Stützelements der Breite des Schlitzes. Hierdurch entsteht zwischen Band und Schlitz des Stellelements eine Klemmverbindung, die einen ausreichenden Halt des Bandes im Schlitz des Stellelements ermöglicht.

Bevorzugterweise weist das Stützelement voneinander beabstandete Löcher auf. Diese Löcher erhöhen die Kombinierbarkeit des Stützelements noch weiter, da diese Löcher als Fixierpunkte für einzelne Pflanzenteile verwendet werden können, ein schnelles Verbinden mehrerer Stützelemente miteinander auf einfachste Weise ermöglichen, eine Befestigung beispielsweise an einer Wand gestatten und weitere denkbare Anwendungen zulassen.

In einer bevorzugten Ausführungsform ist das Befestigungselement ein federnder, einseitig offener Ring, dessen freie Enden abgewinkelt sind. Der Ring umgreift hierbei die zu schützenden Pflanzenteile, seine freien abgewinkelten Enden werden dann in ein Loch des Bandes geklinkt.

Bevorzugterweise entspricht der Durchmesser der Löcher dem Durchmesser des Abstandselements. Hierdurch wird erreicht, daß das Stützelement, d.h. das Band, auch mit dem Abstandselement verbunden sein kann und/oder daß das Stützelement durch in die Löcher des Bandes eingefügte Abstandselemente versteift wird. Auch ist eine Verbindung des Stützelements mit einem oder mehreren Abstandshaltern einer weiteren Vorrichtung möglich.

Bevorzugterweise ist das Stützelement an seinen Kanten mit Schlitzen versehen. Durch diese Schlitze können Pflanzenteile, beispielsweise Pflanzentriebe, mittels Draht , Faden oder Bändern auf einfachste Weise mit dem Stützelement verbunden werden, wobei beispielsweise ein Befestigungsdraht in einem Schlitz geführt wird und somit nicht entlang des Stützelements verrutschen kann.

Vorteilhafterweise ist der Halter mit mindestens einem weiteren Halter axial verbindbar. Dies kann insbesondere bei hohen Pflanzen vorteilhaft sein, wenn die Länge eines Halters allein nicht ausreichend ist.

Bevorzugterweise ist der Halter mit mindestens einem weiteren Halter axial steckbar verbindbar. Dies ermöglicht eine schnelle und einfache axiale Verbindung mehrerer Halter miteinander und gestattet eine schnelle und einfache Lösung dieser Verbindung.

Bevorzugterweise ist der Halter rohrförmig, wobei ein Ende des Halters mit einer Verjüngung versehen ist. Durch die rohrförmige Ausgestaltung des Halters kann dieser leicht ausgelegt werden. Die Verjüngung an einem Ende des Halters gestattet es, diesen in einen weiteren Halter zu stecken und/oder erleichtert das Einstecken des Halters in Mineralböden.

Vorzugsweise ist der Halter mit einem Bodenanker versehbar. Dieser Bodenanker gestattet einen dauerhaften und sicheren Halt des Halters in Mineralboden und ermöglicht zudem eine definierte Einstecktiefe des Halters im Boden.

In einer vorteilhaften Ausgestaltung der Erfindung weist der Bodenanker eine zentrale Bohrung zur Aufnahme des Halters, an einem Ende eine Spitze und am anderen Ende einen Teller auf. Diese Ausgestaltung ermöglicht ein einfaches Einstecken des Bodenankers - und damit des Halters - in den Boden, wobei der Teller eine Einsteckbegrenzung darstellt und eine gleichmäßige Einstecktiefe mehrerer Bodenanker gewährleistet.

Vorzugsweise ist die Bohrung längsseits mit mindestens einem Schlitz versehen. Dieser Schlitz ermöglicht ein leichtes Entfernen von in die Bohrung gelangtem Erdreich.

In einer vorteilhaften Ausführungsform ist der Halter mit einem Wandbefestigungselement versehbar. Dadurch wird es möglich, daß der Halter nicht nur in Mineralböden, sondern auch an Wänden, wie Gebäudemauern oder dergleichen, befestigt werden kann.

Vorteilhafterweise ist das Abstandselement mit wenigstens einem weiteren Abstandselement axial verbindbar. Hierdurch läßt sich die Länge des Abstandselements bei vorgegebener Länge eines Abstandselements beliebig verändern.

Bevorzugterweise ist das Abstandselement mit wenigstens einem weiteren Abstandselement axial steckbar verbindbar. Auf diese Weise lassen sich auch die Abstandselemente auf einfachste Weise miteinander axial verbinden, wobei diese Verbindung leicht und bequem wieder gelöst werden kann.

Bevorzugterweise ist das Abstandselement rohrförmig, wobei ein Ende des Abstandselements mit einer Verjüngung versehen ist. Durch diese Ausgestaltung lassen sich auch die Abstandselemente leicht auslegen, wobei die Verjüngung die axiale Steckbarkeit weiter erleichtert.

Vorzugsweise weisen Halter und Abstandselement den gleichen Querschnitt und den gleichen Durchmesser auf. Durch diese Ausgestaltung läßt sich eine freie Austauschbarkeit von Halter und Abstandselement erreichen, so daß der Halter auch als Abstandselement und umgekehrt verwendet werden kann.

Vorteilhafterweise ist die Vorrichtung mit einem Markierungselement versehbar.
Bei der Verwendung der erfindungsgemäßen Vorrichtung in Pflanzgärten, botanischen Gärten, Gewächshäusern, Laboratorien oder dergleichen ist auch eine Individualisierung der zu stützenden Pflanzen mittels (wetterfester) Markierungen nötig. Diese Markierungen lasen sich aber nur schwer an den bislang bekannten Vorrichtungen anbringen, so daß diese Markierungen meist neben den Markierungen in den Boden gesteckt werden. Da viele Stauden und Blumen aber im Winter nicht mehr über die Bodenoberfläche hinausragen, ist das Auffinden dieser Pflanzen, beispielsweise um die Wurzel, Knollen oder Zwiebeln umzusetzen, schwierig. Eine auf die Vorrichtung aufgesetzte Markierung erleichtert daher das Auffinden der Pflanzen im Winter.

Bevorzugterweise besteht das Markierungselement aus einem zweiteiligen Rahmen mit einem Unterteil und einem Oberteil, wobei das Oberteil zumindest teilweise transparent ist. Hierdurch wird erreicht, daß zwischen Oberteil und Unterteil eine Beschriftung angebracht werden kann, die durch das transparente Oberteil lesbar, gleichzeitig aber vor Umwelteinflüssen geschützt ist.

Bevorzugterweise ist an der Rückseite des Unterteils im Winkel zur Ebene des Unterteils eine Hülse angebracht. Durch diese Hülse kann das Markierungselement leicht auf den Halter, das Abstandselement oder das Stellelement aufgesteckt werden. Insbesondere kann die Anbringung des Markierungselements auf dem Halter dann vorteilhaft sein, wenn im Winter die restlichen Elemente der Vorrichtung entfernt werden und nur noch der Halter zum Wiederauffinden der im Boden verbliebenen Pflanzenteile stehengelassen wird.

Weitere vorteilhafte Ausgestaltungen der Erfindung ergeben sich aus der nachfolgenden Beschreibung, den Fig. und den Patentansprüchen. In der Zeichnung zeigen:
- Fig. 1: ein Ausführungsbeispiel der erfindungsgemäßen Vorrichtung von der Seite,
- Fig. 2: die perspektivische Ansicht einer bevorzugten Ausführungsform eines Stellelements der erfindungsgemäßen Vorrichtung,
- Fig. 3: eine Seitenansicht zweier Stellelemente einer zweiten Ausführungsform,
- Fig. 4: die Seitenansicht einer zweiten Ausführungsform eines Stellelements der erfindungsgemäßen Vorrichtung,
- Fig. 5: die Draufsicht auf das Stellelement aus Fig. 4,
- Fig. 6: eine Teilansicht eines Stützelements der erfindungsgemäßen Vorrichtung von der Seite,
- Fig. 7: die Teilansicht einer zweiten Ausführungsform eines Stützelements der erfindungsgemäßen Vorrichtung von der Seite,
- Fig. 8: die Teilansicht einer dritten Ausführungsform des Stützelements der erfindungsgemäßen Vorrichtung von der Seite,
- Fig. 9: die Draufsicht auf ein Befestigungselement der erfindungsgemäßen Vorrichtung,
- Fig. 10: die Ansicht eines Verbindungselements des Stützelements von hinten,
- Fig. 11: die Ansicht des Verbindungselements aus Fig. 10 von oben,
- Fig. 12: die Teilansicht einer bevorzugten Ausführungsform eines Halters der erfindungsgemäßen Vorrichtung von der Seite,
- Fig. 13: die Teilansicht einer weiteren Ausführungsform eines Halters der erfindungsgemäßen Vorrichtung im Längsschnitt,
- Fig. 14: einen Bodenanker eines Halters der erfindungsgemäßen Vorrichtung von der Seite,
- Fig. 15: eine weitere Ausführungsform der erfindungsgemäßen Vorrichtung von der Seite,
- Fig. 16: die Teilansicht eines Markierungselements der erfindungsgemäßen Vorrichtung von der Seite,
- Fig. 17: ein Ausführungsbeispiel der erfindungsgemäßen Vorrichtung von vorne,
- Fig. 18: ein weiteres Ausführungsbeispiel der erfindungsgemäßen Vorrichtung von der Seite,
- Fig. 19: ein weiteres Ausführungsbeispiel der erfindungsgemäßen Vorrichtung,
- Fig. 20: einen Wandhalter eines Halters der erfindungsgemäßen Vorrichtung von der Seite,
- Fig. 21: den Wandhalter aus Fig. 20 von oben,
- Fig. 22: ein weiteres Ausführungsbeispiel der erfindungsgemäßen Vorrichtung von oben,
- Fig. 23: die perspektivische Ansicht einer weiteren Ausgestaltung der erfindungsgemäßen Vorrichtung,
- Fig. 24: die perspektivische Ansicht einer weiteren Ausführungsform der erfindungsgemäßen Vorrichtung,
- Fig. 25: eine Ausführungsform der erfindungsgemäßen Vorrichtung von oben,
- Fig. 26: eine weitere Ausgestaltung der erfindungsgemäßen Vorrichtung von oben,
- Fig. 27: eine weitere Ausgestaltung der erfindinngsgemäßen Vorrichtung von oben,
- Fig. 28: eine weitere Ausgestaltung der erfindungsgemäßen Vorrichtung von oben, und
- Fig. 29: eine weitere Ausgestaltung der erfindungsgemäßen Vorrichtung von oben.

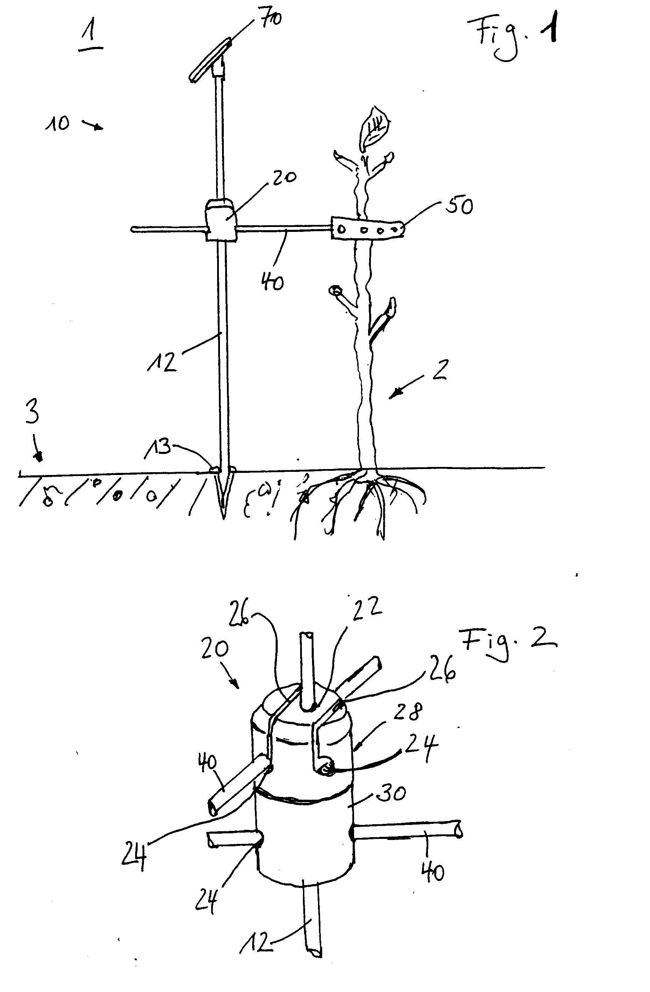

In Fig. 1 ist ein erstes Ausführungsbeispiel der erfindungsgemäßen Vorrichtung 1 dargestellt. Eine Stütze 10 zum Abstützen von Pflanzen und Pflanzenteilen besteht aus einem Halter 12, einem Stellelement 20, einem Abstandselement 40 und einem Stützelement 50. Auf den Halter 12 ist ein Bodenanker 13 aufgesetzt, welcher in den eine Pflanze 2 umgebenden Boden 3 gesteckt ist. Auf die Stütze 10 ist ein Markierungselement 70 aufgesetzt.

In Fig. 2 ist eine erste Ausführungsform des Stellelements 20 dargestellt. Das Stellelement 20 der in Fig. 2 dargestellten ersten Ausführungsform besteht aus einem Oberteil 28 und einem Unterteil 30, welche axial drehbar miteinander verbunden sind. Durch Oberteil 28 und Unterteil 30 durchläuft das Stellelement 20 eine durchgehende, axiale Bohrung 22, welche die Längsachse des Stellelements 20 bildet. Durch diese Bohrung 22 ist das Stellelement 20 auf den Halter 12 aufsetzbar und entlang des Halters 12 höhenverstellbar. Das Unterteil 30 und das Oberteil 28 des Stellelements 20 sind unabhängig voneinander um den Halter 12 herum drehbar.

Oberteil 28 und Unterteil 30 des Stellelements 20 weisen quer zur Bohrung 22 verlaufende Bohrungen 24 auf, welche als Lager für Abstandselemente 40 dienen. Die Abstandselemente 40 sind entlang der Bohrungen 24 verschieb- und drehbar. Das Oberteil 28 des Stellelements 20 ist mit Schlitzen 26 versehen, welche parallel zur Bohrung 22 bzw. zur Bohrung 24 geführt sind. Die Schlitze 26 dienen als Lager für das Stützelement 50.

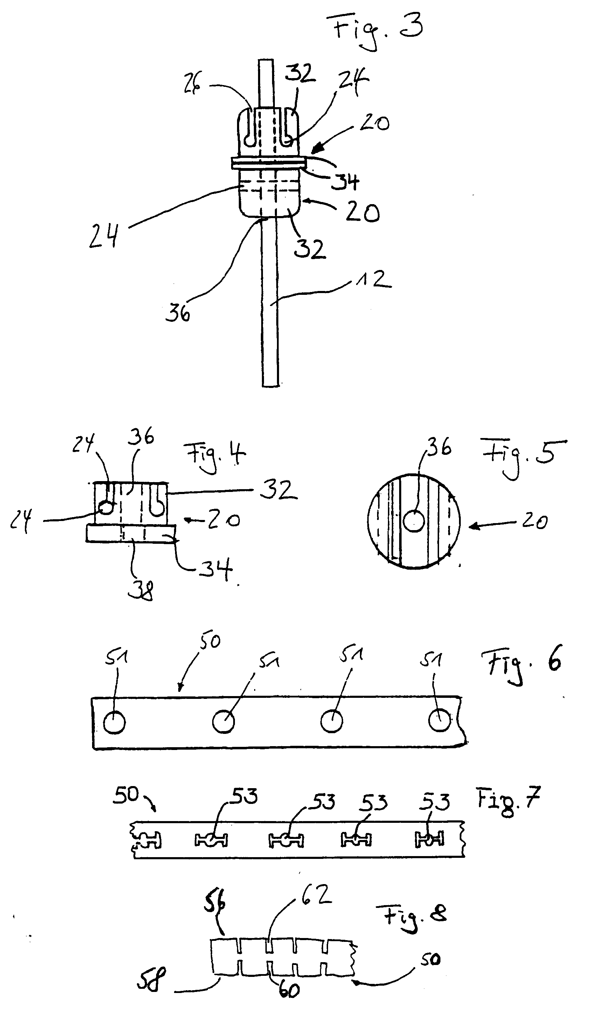

In den Fig. 3 bis 5 ist eine zweite Ausführungsform des Stellelements 20 dargestellt. Dieses besitzt wie das Stellelement 20 gemäß Fig. 2 ein Oberteil 32 , welches weitgehend dem Oberteil 28 des Stellelements 20 aus Fig. 2 entspricht. Auch das Oberteil 32 des Stellelements 20 aus den Fig. 3 bis 5 weist Bohrungen 24 als Lager für Abstandselemente 40 und Schlitze 26 als Lager für Stützelemente 50 auf. Ein Unterteil 34 des Stellelements 20 aus den Fig. 3 bis 5 ist als mit dem Oberteil 32 axial drehbar verbundener Teller ausgebildet. Das Oberteil 32 weist eine axiale Bohrung 36 und das Unterteil 34 weist eine axiale Bohrung 38 auf, wobei die Bohrung 38 des Unterteils 34 zur Bohrung 36 des Oberteils 32 exzentrisch versetzt ist.
Zum Verschieben des Stellelements 20 gemäß den Fig. 3 bis 5 wird das Unterteil 34 gegenüber dem Oberteil 32 so verdreht, daß die Bohrungen 36 und 38 fluchten und das Stellelement 20 verschoben werden kann. Umgekehrt wird zur Festlegung des Stellelements 20 aus Fig. 3 bis 5 das Unterteil 32 so verdreht, daß die Bohrungen 36 und 48 außer Flucht geraten und sich das Stellelement 20 gegen den Halter 12 verklemmt.

Das Stellelement 20 gemäß den Fig. 3 bis 5 kann an seinen Ober- und Unterteilen 32,34 mit einer fühl- und sichtbaren Markierung, beispielsweise mit erhabenen Pfeilen oder dergleichen, versehen sein, welche es gestatten, optisch und/oder sensorisch festzustellen, in welcher Lage sich die Bohrungen 36,38 zueinander befinden, d.h., festzustellen, ob sich das Stellelement in gelöstem oder arretiertem Zustand befindet. Zu diesem Zweck kann das Stellelement 20 gemäß den Fig. 3 bis 5 zwischen seinem Oberteil 32 und seinem Unterteil auch mit einer Rastung versehen sein, welche dann wirksam wird, wenn die Klemmwirkung der gegeneinander verdrehten Ober- und Unterteile 32,34 am größten ist. Eine derartige Rastung gestattet zudem eine akustische Kontrolle der optimalen Klemmwirkung des Stellelements 20 gegen den Halter 12.

In Fig.3 sind zwei Stellelemente 20 der zweiten Ausführungsform dargestellt, welche auf einen Halter 12 aufgeschoben sind, wobei die Unterteile 34 der beiden Stellelemente 20 aus Fig. 3 gegeneinander gerichtet sind. Durch diese Anordnung läßt sich der gleiche Effekt wie mit dem Stellelement 20 aus Fig. 2 erzielen, wobei sich aber die Stellelemente 20 gemäß Fig. 3 durch ihre oben beschriebene Ausgestaltung von Ober- und Unterteil 32,34 mit besserer Klemmwirkung beziehungsweise mit einer einfacheren Ausrichtung der Abstandselemente 40 unabhängig von der Arretierungsstellung des Unterteils 34 gegenüber dem Oberteil 32am Halter 12 festlegen lassen.

Die Stellelemente 20 gemäß den Fig. 2 - 5 bestehen aus Kunststoff, so daß eine gewünschte Flexibilität der Schlitze 26 gewährleistet ist, wodurch auch Stützelemente 50 mit einer größeren Stärke als es der Breite der Schlitze 26 entspricht, in die Schlitze 26 eingeführt werden können.

In den Fig. 6 - 8 sind Ausführungsbeispiele von Stützelementen 50 der erfindinngsgemäßen Vorrichtung 1 dargestellt. Diese Stützelemente sind flexible Bänder aus einem dafür geeigneten Kunststoff. Das Stützelement 50 aus Fig. 6 weist gleichmäßig voneinander beabstandete, kreisrunde Löcher 51 auf. Diese Löcher 51 dienen dazu, Enden 52 und 54 des Stützelements 50 miteinander zu verbinden, Abstandselemente 40 oder Halter 12 aufzunehmen oder Pflanzenteile mittels Draht oder auf sonstwie geeignete Weise mit den Löchern 51 zu verbinden.

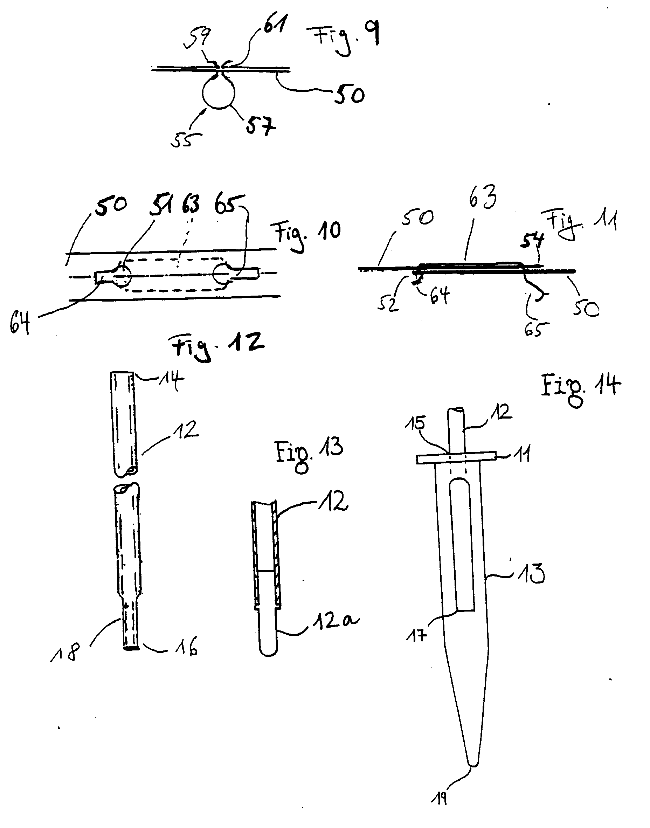

In Fig. 7 ist eine zweite Ausführungsform eines Stützelements 50 dargestellt. Dieses weist gegenüber dem Stützelement 50 aus Fig. 6 Langlöcher 53 auf, welche in vertikale Schlitze münden. Dies kann vorteilhaft sein, wenn in die Langlöcher 53 in Fig. 9 dargestellte Befestigungselemente 55 oder übliche gezahnte Kunststoffstreifen, beispielsweise Kabelbinder, eingebracht werden sollen Beim Einbringen von Kunststoffstreifen in die Langlöcher 53 können die Kunststoffstreifen so verdreht werden, daß sie in die vertikalen Schlitze gleiten und dadurch am Stützelement 50 fixiert werden.

Das in Fig. 9 dargestellte Befestigungselement 55 besteht aus einem offenen Ring 57, dessen freie Enden 59 und 61 so ausgebildet sind, daß sie beim Einsetzen in ein Loch 53 des Stützelements 50 das Stützelement 50 hintergreifen. Mit diesem Befestigungselement 55 können Pflanzenteile mit dem Stützelement 50 verbunden werden.
Werden anstelle der Ringe 57 übliche Kunststoffbänder verwendet, können beliebig lange Schlaufen gebildet werden.

In Fig. 8 ist eine dritte Ausführungsform des Stützelements 50 dargestellt. Quer zu den Kanten 56 und 58 des Stützelements 50 verlaufen bei diesem Stützelement 50 Schlitze 60 und 62. In diesen Schlitzen 60 und 62 können zu stützende Pflanzenteile mit Draht oder Band fixiert werden.

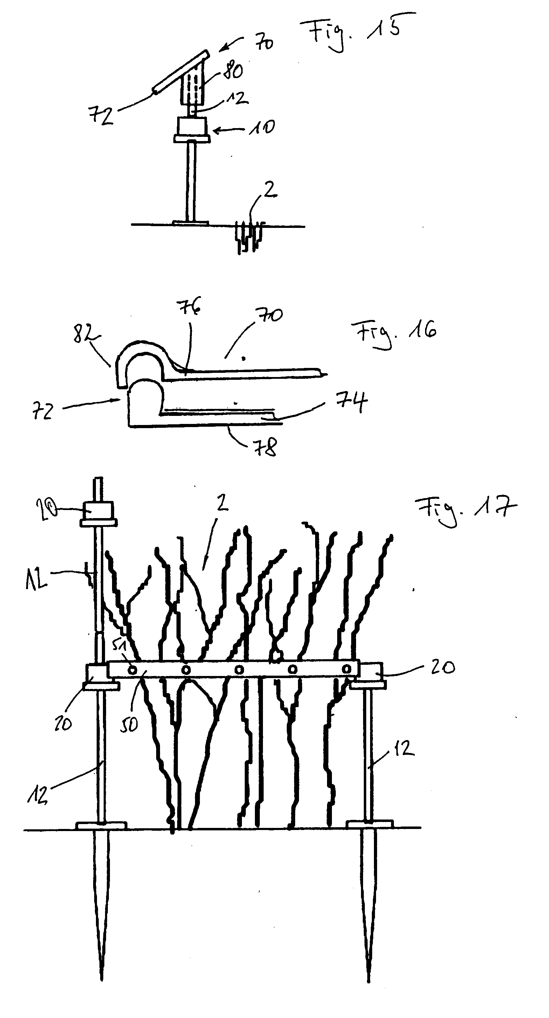

In den Fig. 10 und 11 ist eine bevorzugte Ausführungsform der Verbindung der freien Enden 52 und 54 des Stützelements 50 mittels einer als Verbindungselement dienenden Klammer 63 dargestellt. Enden 64 und 65 werden hierbei durch in unmittelbarer Nähe zu den Enden 54 und 52 befindlichen Löchern 51 geführt und zum Schließen des Stützelements 50 in Ringform umgebogen. Es ist auch möglich, durch die Klammer 63 mehrere Stützelemente 50 miteinander zu verbinden.

In Fig. 12 ist ein Halter 12 dargestellt. Der Halter 12 ist ein Metallrohr mit einem hinteren Ende 14 und einem vorderen Ende 16. Das vordere Ende 16 weist eine Verjüngung 18 auf. Durch diese Verjüngung 18 kann der Halter 12 in einen weiteren Halter 12 gesteckt werden. Der Durchmesser der Verjüngung 18 ist dabei so bemessen, daß sie einen ausreichenden Klemmsitz in einen weiteren Halter ermöglicht. Ein nicht dargestelltes Abstandselement 40 weist ebenso wie der Halter 12 aus Fig. 12 ein hinteres Ende 42 und ein vorderes Ende 44 auf, wobei das vordere Ende 44 ebenso wie der Halter 12 mit einer Verjüngung 46 versehen ist. Der Durchmesser des Abstandselements 40 entspricht dabei dem Durchmesser des Halters 12, so daß diese jeweils als Abstandselement 40 oder als Halter 12 verwendet und miteinander verbunden werden können.

In Fig. 13 ist im Längsschnitt eine zweite Ausführungsform des Halters 12 dargestellt. Dieser Halter 12 weist im Gegensatz zum Halter 12 aus Fig. 12 keine Verjüngung an seinem Ende auf, sondern ist mit einem Zapfen 12a versehen, welcher in das offene Ende des Halters 12 eingesteckt ist. Ein Ende des Zapfens 12a ragt so über das offene Ende des Halters 12 vor, daß dieses Ende in das offene Ende eines weiteren Halters gesteckt werden kann und dadurch die beiden Halter miteinander verbunden werden können. Der Zapfen 12a kann auch zur Verbindung zweier Abstandshalter verwendet werden.

In Fig. 14 ist ein Bodenanker 13 dargestellt. Der Bodenanker 13 weist ein Vierkantprofil auf, wobei jede Seite mit einer längs verlaufenden Hohlkehle versehen ist, so daß der Bodenanker in etwa die Querschnittsform eines Kreuzes aufweist. Eine zentral im Bodenanker 13 angebrachte Bohrung 15 dient der Aufnahme des Halters 12. Um eventuell in die Bohrung 15 eingedrungene Erde leicht entfernen zu können, ist die Bohrung 15 längsseits mit in die Hohlkehlen eingeschnittenen Schlitzen 17 versehen. Eine an einem Ende des Bodenankers 13 befindliche Spitze 19 dient zum Einbringen des Bodenankers in den Mineralboden 3. Am der Spitze 19 gegenüber liegenden Ende ist der Bodenanker 13 mit einem Teller 11 versehen, der gewährleistet, daß der Bodenanker 13 nicht zu tief in den Mineralboden 3 eingesteckt werden kann und zudem als optische Hilfe für die korrekte Einstecktiefe des Bodenankers 13 dient. Dadurch wird gewährleistet, daß beim Einstecken mehrerer Bodenanker 13 die Bodenanker 13 stets die gleiche Einstecktiefe aufweisen, wodurch in den Bodenanker 13 eingesteckte Halter 12 ebenfalls die gleiche Höhe aufweisen können.

In Fig. 15 ist eine Stütze 10 dargestellt, auf deren Halter 12 ein Markierungselement 70 aufgesteckt ist. Dieses Markierungselement 70 weist einen Rahmen 72 auf, der, wie in Fig. 16 dargestellt, aus einem Oberteil 76 und einem Unterteil 74 besteht. Das Oberteil 76 wird auf das Unterteil 74 durch einen Schnappverschluß 82 aufgesetzt. Das Oberteil 76 ist zumindest teilweise transparent, so daß eine auf das Unterteil 74 aufgebrachte Markierung oder ein zwischen Unterteil 74 und Oberteil 76 eingebrachtes Blatt durch das Oberteil 76 hindurch erkenn- und lesbar bleibt. Auf der Rückseite 78 des Unterteils 74 ist eine Hülse 80 angebracht, deren Durchmesser dem Durchmesser des Halters entspricht und auf den Halter 12 aufgesteckt werden kann.

Das Markierungselement 70 gewährleistet, daß, wie in Fig. 15 dargestellt, auch im Winter, wenn die Pflanze 2 keine oberirdischen Teile mehr aufweist, die Pflanze 2 identifizierbar bleibt und geortet werden kann.

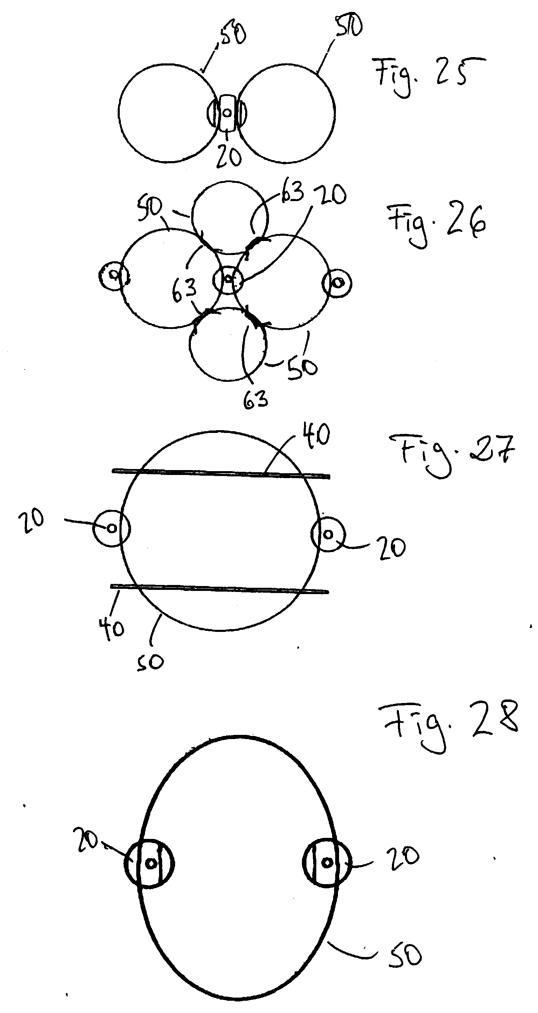

In den Fig. 17 bis 19 und 22 bis 28 sind verschiedene Kombinationsmöglichkeiten der Elemente der Vorrichtung dargestellt. In Fig. 17 ist das mit Löchern 51 versehene Stützelement 50 als geschlossener Ring in zwei sich gegenüberliegenden Stellelementen 20 gelagert. Die Stellelemente 20 sind auf Halter 12 aufgesteckt. Durch das Stützelement 20 wird eine strauchartige Pflanze 2 gestützt. Ein weiteres Stellelement 20 befindet sich auf dem in Fig. 17 linken Halter 12 über der Pflanze 2 und dient dazu, beim Höherwachsen der Pflanze 2 mit einem weiteren Stützelement 50 versehen werden zu können.

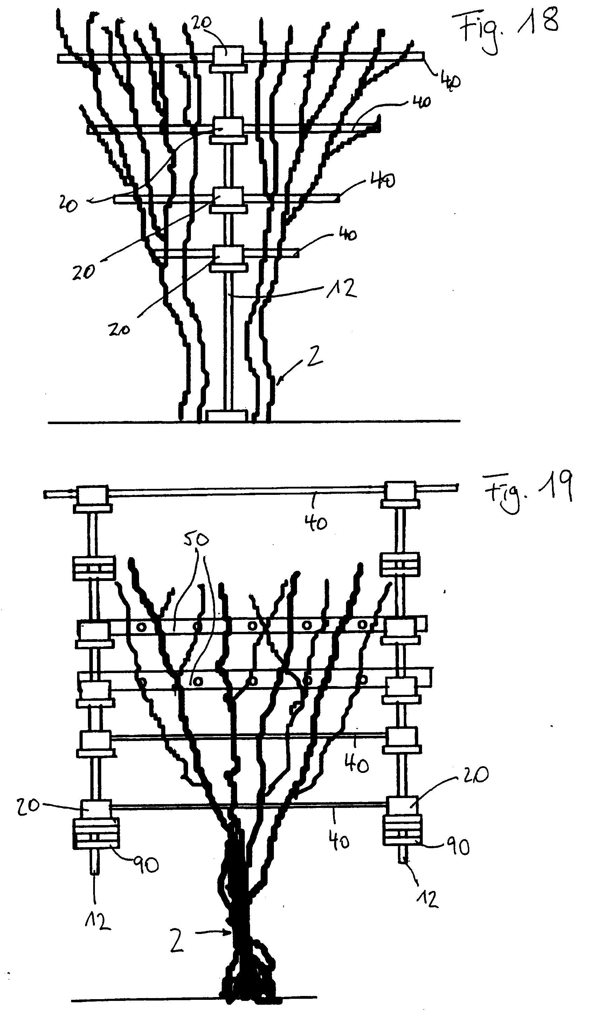

In Fig. 18 ist eine weitere Ausgestaltungsmöglichkeit der Vorrichtung 1 dargestellt. Bei dieser Ausgestaltung sind vier Stellelemente 20 übereinander auf einem Halter 12 angebracht. Die Stellelemente 20 sind mit Abstandselementen 40 versehen, welche dazu dienen, die Pflanze 2 zu stützen.

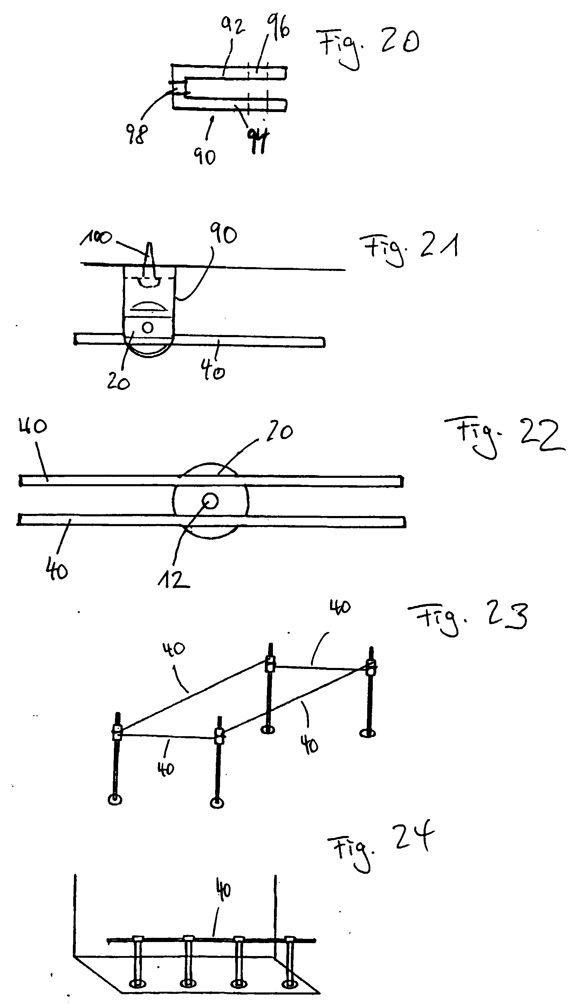

In Fig. 19 ist eine weitere Ausgestaltungsmöglichkeit der Vorrichtung 1 dargestellt. Hierbei sind zwei sich gegenüberliegende Halter 12 durch einen Wandhalter 90 an einer Gebäudewand befestigt. Der in den Fig. 20 und 21 dargestellte Wandhalter 90 ist im wesentlichen U-förmig und weist eine durch beide Schenkel 92 und 94 verlaufende Bohrung 96 auf. Durch eine zweite Bohrung 98 ist der Wandhalter 90 mittels geeigneter Mittel, wie eine in der Fig. 21 dargestellte Schraube 100, an einer Gebäudewand oder dergleichen anbringbar.

In Fig. 22 ist in Aufsicht eine weitere Ausgestaltungsmöglichkeit der Vorrichtung 1 dargestellt, bei welcher zwei Abstandselemente 40 parallel zueinander in einem Stellelement 20 gelagert sind. Der Zwischenraum zwischen den beiden Abstandselementen 40 kann zum Stützen von Pflanzenteilen verwendet werden, so daß die Abstandselemente 40 die Funktion des Stützelements 50 übernehmen.

In den Fig. 23 und 24 sind Kombinationen mehrerer Vorrichtungen 1 miteinander dargestellt. Fig. 23 zeigt dabei die Anordnung der Vorrichtung als rechteckigen Rahmen, Fig. 24 zeigt die Ausgestaltung der Vorrichtung als Galerie zum Einsatz an Wegrändern. Die dort dargestellten Abstandselemente verschiedener Länge können dabei einstückig sein oder durch Ineinanderstecken mehrerer Abstandselemente gebildet sein. Durch die einfache Höhenverstellbarkeit der Stellelemente 20 lassen sich durch die Verbindung mehrerer Vorrichtungen Rahmen oder ähnliche Konstruktionen bilden, welche sich auf einfache Weise installieren und ausrichten lassen.

Die Fig. 25 bis 28 zeigen weitere Kombinationsmöglichkeiten von Stellelementen 20, Stützelementen 50 und Abstandselementen 40, wobei in das in Fig. 27 dargestellte Stützelement 50 zur Versteifung des Stützelementes 50 Abstandselemente 40 eingesteckt sind. In Fig. 28 ist dargestellt, daß durch die Flexibilität des Stützelementes 50 auch eine ovale Konfiguration des Stützelementes 50 möglich ist.

In Fig. 29 ist in Draufsicht ein Stellelement 20 dargestellt, in dessen Schlitz 26 ein Stützelement 50 so eingebracht ist, daß sich beide Enden 52,54 des Stützelements 50 in dem Schlitz 26 befinden und aneinander anstoßen. Auf diese Weise ist es möglich, daß zur Bildung eines Ringes die Enden 52,54 des bandförmigen Stützelements 50 nicht separat, beispielsweise durch Draht, Ringe oder dergleichen, miteinander verbunden werden müssen.
Es ist auch möglich, ein Ende des Halteelements 50 in einen Schlitz 26, und das andere Ende des Halteelements 50 in den gegenüberliegenden Schlitz 26 des Stellelements einzuklemmen.

## Patentansprüche

1. Vorrichtung zum Ausrichten von Pflanzen mit einer Stütze (10) zum Abstützen von Pflanzen und Pflanzenteilen, bestehend aus mindestens einem Halter (12), aus mindestens einem Stellelement (20), welches an dem Halter (12) höhenverstellbar anbringbar ist, und aus mindestens einem Stützelement (50), welches die zu stützende Pflanze zumindest teilweise umgreift, wobei das Stützelement (50) längenverstellbar ist und wobei der Abstand zwischen Stellelement (20) und Stützelement (50) durch ein Abstandselement (40) verstellbar ist, **dadurch gekennzeichnet**, daß das Stellelement (20) zur Halterung jeweils des Stützelements (50) und des Abstandselements (40) ausgebildet ist, wobei das Abstandselement (40) zur Halterung des Stützelements (50) und zur Verbindung mit mindestens einem weiteren Stellelement (20) ausgebildet ist, oder wobei das Abstandselement (40) als Stützelement (50) ausgebildet ist.

2. Vorrichtung nach Anspruch 1, **dadurch gekennzeichnet**, daß das Stellelement (20) aus einem Oberteil (28;32) und einem Unterteil (30;34) besteht, welche drehbar miteinander verbunden sind und eine gemeinsame, dem Durchmesser des Halters (12) entsprechende und die Längsachse bildende zentrale Bohrung (22;36,38) aufweisen, wobei das Stellelement (20) mindestens einen senkrechten Schlitz (26) zur Aufnahme des Stützelements (50) aufweist.

3. Vorrichtung nach Anspruch 1 oder 2, **dadurch gekennzeichnet**, daß das Stellelement (20) mindestens eine als Lager für das Abstandselement (40) dienende, quer zur Längsachse (22) verlaufende Bohrung (24) aufweist.

4. Vorrichtung nach Anspruch 2 und 3, **dadurch gekennzeichnet**, daß der Schlitz (26) parallel zur Längsachse (22) bzw. zur Bohrung (24) geführt ist.

5. Vorrichtung nach Anspruch 2 bis 4, **dadurch gekennzeichnet**, daß der Schlitz (26) in die Bohrung (24) mündet.

6. Vorrichtung nach einem der Ansprüche 1 bis 5, **dadurch gekennzeichnet**, daß das Stellelement (20) um den Halter (12) drehbar ist.

7. Vorrichtung nach einem der Ansprüche 2 bis 6, **dadurch gekennzeichnet**, daß das Unterteil (34) des Stellelements (20) mit einer gegenüber der Bohrung (36) des Oberteils (32) exzentrisch versetzten Bohrung (38) versehen ist.

8. Vorrichtung nach Anspruch 1, **dadurch gekennzeichnet**, daß Stützelement (50) ein flexibles Band ist.

9. Vorrichtung nach Anspruch 1 und 8, **dadurch gekennzeichnet**, daß Enden (52, 54) des Bandes (50) miteinander verbindbar sind.

10. Vorrichtung nach Anspruch 1 und einem der Ansprüche 8 und 9, **dadurch gekennzeichnet**, daß die Dicke des Stützelements (50) der Breite des Schlitzes (26) entspricht.

11. Vorrichtung nach Anspruch 1 und einem der Ansprüche 8 - 10, **dadurch gekennzeichnet**, daß das Stützelement (50) voneinander beabstandete Löcher (51; 53) aufweist.

12. Vorrichtung nach Anspruch 11, **dadurch gekennzeichnet**, daß in die Löcher (51; 53) des Bandes (50) mindestens ein Befestigungselement (55) einbringbar ist.

13. Vorrichtung nach Anspruch 12, **dadurch gekennzeichnet**, daß das Befestigungselement (55) ein federnder, einseitig offener Ring (57) ist, dessen freie Enden (59, 61) abgewinkelt sind.

14. Vorrichtung nach Anspruch 1 und einem der Ansprüche 11 und 12, **dadurch gekennzeichnet**, daß der Durchmesser der Löcher (51; 53) dem Durchmesser des Abstandselements (40) entspricht.

15. Vorrichtung nach Anspruch 1 und einem der Ansprüche 8 - 14, **dadurch gekennzeichnet**, daß das Stützelement (50) an seinen Kanten (56, 58) mit Schlitzen (60, 62) versehen ist.

16. Vorrichtung nach Anspruch 1, **dadurch gekennzeichnet**, daß der Halter (12) mit mindestens einem weiteren Halter (12) axial verbindbar ist.

17. Vorrichtung nach Anspruch 1, **dadurch gekennzeichnet**, daß der Halter (12) mit mindestens einem weiteren Halter (12) axial steckbar verbindbar ist.

18. Vorrichtung nach Anspruch 1 und einem der Ansprüche 16 und 17, **dadurch gekennzeichnet**, daß der Halter (12) rohrförmig ist, wobei ein Ende (16) des Halters (12) mit einer Verjüngung (18) versehen ist.

19. Vorrichtung nach Anspruch 1 und einem der Ansprüche 16 - 18, **dadurch gekennzeichnet**, daß der Halter (12) mit einem Bodenanker (13) versehbar ist.

20. Vorrichtung nach Anspruch 19, **dadurch gekennzeichnet**, daß der Bodenanker (13) eine zentrale Bohrung (15) zur Aufnahme des Halters (12), an einem Ende eine Spitze (19) und am anderen Ende einen Teller (11) aufweist.

21. Vorrichtung nach Anspruch 20, **dadurch gekennzeichnet**, daß die Bohrung (15) längsseits mit mindestens einem Schlitz (17) versehen ist.

22. Vorrichtung nach Anspruch 1 und einem der Ansprüche 16 - 18, **dadurch gekennzeichnet**, daß der Halter (12) mit einem Wandbefestigungselement (90) versehbar ist.

23. Vorrichtung nach Anspruch 1, **dadurch gekennzeichnet**, daß das Abstandselement (40) mit wenigstens einem weiteren Abstandselement (40) axial verbindbar ist.

24. Vorrichtung nach Anspruch 1, **dadurch gekennzeichnet**, daß das Abstandselement (40) mit wenigstens einem weiteren Abstandselement (40) axial steckbar verbindbar ist.

25. Vorrichtung nach Anspruch 1 und einem der Ansprüche 23 und 24, **dadurch gekennzeichnet**, daß das Abstandselement (40) rohrförmig ist, wobei ein Ende (44) des Abstandselements (40) mit einer Verjüngung (46) versehen ist.

26. Vorrichtung nach Anspruch 1 und einem der Ansprüche 16 - 18 und 23 - 25, **dadurch gekennzeichnet**, daß Halter (12) und Abstandselement (40) den gleichen Querschnitt und den gleichen Durchmesser aufweisen.

27. Vorrichtung nach Anspruch 1, **dadurch gekennzeichnet**, daß die Vorrichtung (1) mit einem Markierungselement (70) versehbar ist.

28. Vorrichtung nach Anspruch 27, **dadurch gekennzeichnet**, daß das Markierungselement (70) aus einem zweiteiligen Rahmen (72) mit einem Unterteil (74) und einem Oberteil (76) besteht, wobei das Oberteil (76) zumindest teilweise transparent ist.

29. Vorrichtung nach Anspruch 28, **dadurch gekennzeichnet**, daß an der Rückseite (78) des Unterteils (74) im Winkel zur Ebene des Unterteils (74) eine Hülse (80) angebracht ist.
